# EUROPEAN PATENT APPLICATION

(11) **EP 1 569 142 A2**
(43) Date of publication of application: **31.08.2005**
(21) Application number: 05101154.2
(22) Date of filing: 16.02.2005
(51) Int. Cl.: G06F 17/30

(54) **Hypertext navigation for shared displays**

(30) Priority: 27.02.2004 US 788503
(71) Applicant: MICROSOFT CORPORATION, Redmond, WA 98052 (US)
(72) Inventor: Wilson, Andrew David, Redmond, WA Washington 98052 (US); Toyama, Kentaro, Redmond, WA Washington 98052 (US); Agrawala, Maneesh, Redmond, WA Washington 98052 (US); Logan, Ronald Keith, Redmond, WA Washington 98052 (US); Drucker, Steven M., Redmond, WA Washington 98052 (US); Basu, Sumit, Redmond, WA Washington 98052 (US); Paek, Tim, Redmond, WA Washington 98052 (US); Kristjansson, Trausti Thor, Redmond, WA Washington 98052 (US)
(74) Representative: Grünecker, Kinkeldey, Stockmair & Schwanhäusser Anwaltssozietät

(57) **Abstract**

A browsing system and method for browsing allows multiple users to access and view hypertext documents on a shared display. A browsing system includes a hypertext document converter configured to convert a component in a hypertext document to include alternate component activation tags. A hypertext display controller controls a display module to display the converted component in the hypertext document. The input processor receives and processes an input signal related to the alternate component activation tag from at least one of the plurality of input devices. The browsing system activates the converted component of the hypertext document upon receiving the input signal.

## Description

### BACKGROUND OF THE INVENTION

The present invention relates to hypertext documents. In particular, the present invention relates to navigating and browsing hypertext documents on an interactive shared display.

Shared displays are generally used to provide information to many viewers at the same time. Examples of shared displays used in large groups include movie theater screens, meeting room projection screens, flight information kiosks at airports and large displays used in public forums such as Times Square and Piccadilly Circus. These large displays can be utilized by advertisers as a way to host ads with richer media content. In addition, conferences, conventions, talks and demonstrations are accompanied by shared displays for audience members. Examples of shared displays, which cater to small audiences include retail segments such as coffee shops, bars and restaurants. Although viewers receive information from shared displays, most shared displays are not interactive.

Although interactive shared displays do exist in some forms, interactive shared displays suffer from a variety of limitations. These limitations make it difficult for a user to interact, especially in those interactive shared displays which use input devices that are typically carried on the user.

In one example, input devices typically carried on a user, such as PDAs and cell phones, that communicate with other devices have high latencies (i.e. communication often requires some sort of intermediary connection point).

In another example, typical input devices used to interact with other devices are difficult to use to transmit textual information. Unless voice-to-text technology, such as speech recognition is employed, transmission of textual information is generally cumbersome and time-consuming. While pen-based interfaces and thumb keyboards are becoming more common, these interfaces are still slower and more tedious than a full-sized keyboard. Moreover, even if a personal input device can include a pointing device, the personal input device provides no mechanism for transmitting the pointing device information to another device.

In yet another example, typical input devices can transmit information to other devices. However, these input devices have no ability to receive information back from other devices.

Besides interactive shared displays suffering from a variety of limitations, the existing interactive shared displays don't allow for navigation and retrieving of data from particular sources. For example, computer systems use various techniques and mechanisms for navigating to and retrieving data from sources such as local storage, local networks and remote networks. A particular type of navigation system includes an Internet browser (i.e. Microsoft® Internet Explorer provided by Microsoft Corporation of Redmond, Washington, Safari® provided by Apple Computer, Inc. of Cupertino, California and Mozilla® provided by Mozilla Foundation of San Francisco, California). The Internet browser supports navigation of the Internet (i.e. a global network of interconnected computer networks) using hypertext documents residing on the World Wide Web (i.e. a portion of the Internet including "sites" which make multi-media documents in hypertext mark-up language (HTML) format generally available for downloading or retrieval by individuals having Internet access).

The HTML documents generally contain hyperlinks. Hyperlinks are references (i.e. in the form of uniform resource locators or URLs) to other HTML documents on the World Wide Web or other parts of the same document. Generally, hyperlinks are displayed as underlined or otherwise highlighted text, or graphics embedded in the document which the user can activate by "clicking" using a mouse. When a hyperlink is activated, the Internet browser navigates to the document that the hyperlink references by retrieving and displaying the referenced document in place of the currently displayed document.

Since "web browsing" is usually limited to a single individual interacting with a personal desktop or laptop computer, browsing interfaces are designed and are assumed to be accessible to a full keyboard and mouse. Shared displays, however, typically do not offer such input methods. Therefore viewers must use a variety of types of portable input devices (i.e. PDAs, cell phones, etc.) to interact with such shared displays.

### SUMMARY OF THE INVENTION

A browsing system and method for browsing allows multiple users to access and view hypertext documents on a shared display. A browsing system includes a hypertext document converter configured to convert a component in a hypertext document to include alternate component activation tags. A hypertext display controller controls a display module to display the converted component in the hypertext document. An input processor receives and processes an input signal related to the alternate component activation tag from at least one of a plurality of input devices. The browsing system activates the converted component of the hypertext document upon receiving the input signal.

In another embodiment of the present invention, a browsing system includes a mode controller configured to modify a plurality of browsing modes to include alternate browsing activation tags. An input processor is configured to receive and process an input signal related to a particular alternate browsing activation tag from at least one of a plurality of input devices. The browsing system activates a particular browsing mode upon receipt of the input signal.

### BRIEF DESCRIPTION OF THE DRAWINGS

FIG. 1 is a schematic block diagram of a computing environment.
FIG. 2 is a simplified block diagram of a prior art browsing system.
FIG. 3 is a simplified block diagram illustrating one exemplary embodiment of a browsing system in accordance with the present invention.
FIG. 4 illustrates a flow chart of a method of using a browsing system to browse a hypertext document in accordance with an embodiment of the present invention.
FIG. 5 illustrates a flow chart of a method of using a browsing system to browse a hypertext document in accordance with an embodiment of the present invention.
FIG. 6 illustrates a flow chart of a method of using a browsing system to browse a hypertext document in accordance with an embodiment of the present invention.

### DETAILED DESCRIPTION OF ILLUSTRATIVE EMBODIMENTS

It should be noted that to the extent that the present invention is described in the context of shared displays, the present invention is applicable to any type of display. In addition, to the extent that the present invention is directed towards a browsing system, the present invention is applicable towards any type of application or competing device that can display hypertext documents or web pages from a network, such as the Internet. Prior to describing the present invention in detail, embodiments of illustrative computing environments within which the present invention can be applied will be described.

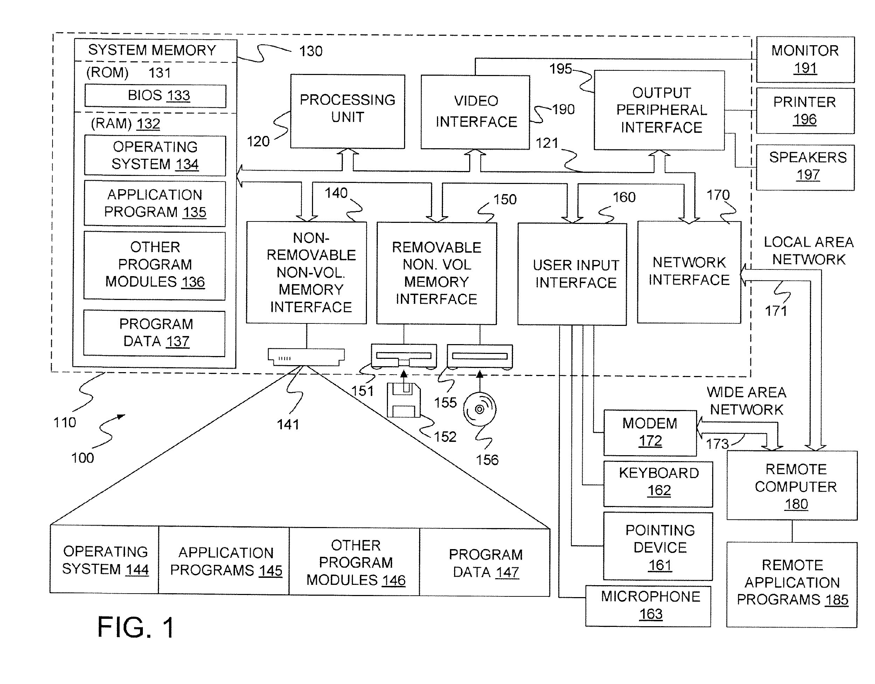

FIG. 1 illustrates an example of a suitable computing system environment 100 within which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, tablet computers, mainframe computers, distributed computing environments, smartphones, pocket PCs, Personal Data Assistants (such as those manufactured by Palm™), wearable computers that include any of the above systems or devices, and the like. Other suitable examples include various retail-oriented devices such as, but not limited to, self checkout systems, point-of-sale terminals, self-service kiosks, Electronic Cash Registers and Electronic Payment Terminals (e.g. veriphone terminals).

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus and Universal Serial Bus (USB).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197, printer 196, which may be connected through an output peripheral interface 195, and a camera (not shown). A camera (such as a digital/electronic still or video camera, or film/photographic scanner) capable of capturing a sequence of images can also be included as an input device to personal computer 110. Further, multiple cameras could be included as input devices to personal computer 110. The images, from the one or more cameras, are input into computer 110 via a camera interface (not shown). The camera interface is connected to system bus 121, thereby allowing the images to be routed to and stored in RAM 132, or one of the data storage devices associated with computer 110. However, it should be noted that image data can be input into computer 110 from any of the aforementioned computer readable mediums as well, without requiring use of a camera.

The computer 110 may operate in a networked environment using logical connections to one or more remote computers, such as a remote computer 180. Remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks such as wireless networks. Such networking environments are commonplace in offices, enterprise-wide computer networks, intranets and the Internet. Applicable wireless networks also include, but are not limited to, wireless LAN/Wi-Fi, radio frequency using Bluetooth protocol and also IP over cellular (telephone) communications network.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

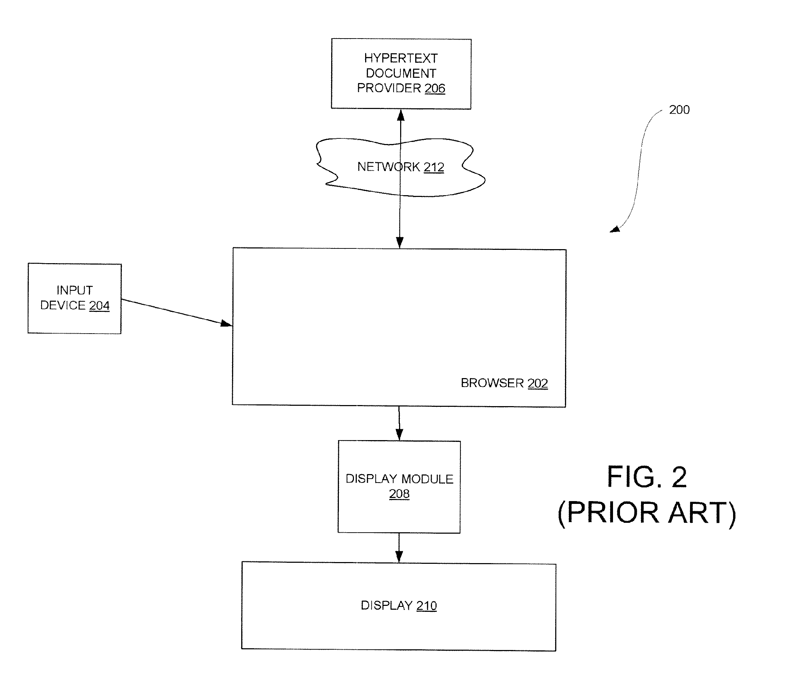

The present invention is not limited to any particular browsing environment. However, for the purposes of providing exemplary context, FIG. 2 is a simplified block diagram of a prior art browsing system 200.

Browsing system 200 includes a browser 202, an input device 204, a display module 208 and a display 210. Browser 202 can be embodied as a computer-readable medium having computer executable instructions to display and navigate a hypertext document provided by hypertext document provider 206. Generally, input device 204 includes a mouse that transmits user positional information and selection information to browser 202 and/or a keyboard device for transmitting textual and numerical data to browser 202.

Hypertext document provider 206 supplies hypertext documents to browser 202 over a network 212. Typically, network 212 is the internet. Thus, hypertext document provider 206 generally supplies web pages over network 212. Upon a user transmitting a request to view a hypertext document via input device 204, hypertext document provider 206 supplies the requested hypertext document to browser 202. Browser 202 instructs display module 208 to display the requested hypertext document on display 210. For example, a hypertext document displayed on display 210 has a plurality of hyperlinks. A user who wishes to view a particular hyperlink, uses input device 204 to position an arrow over the link. The user then "clicks" using the input device and browser 202 instructs display module 208 to display the hypertext document associated with that particular link.

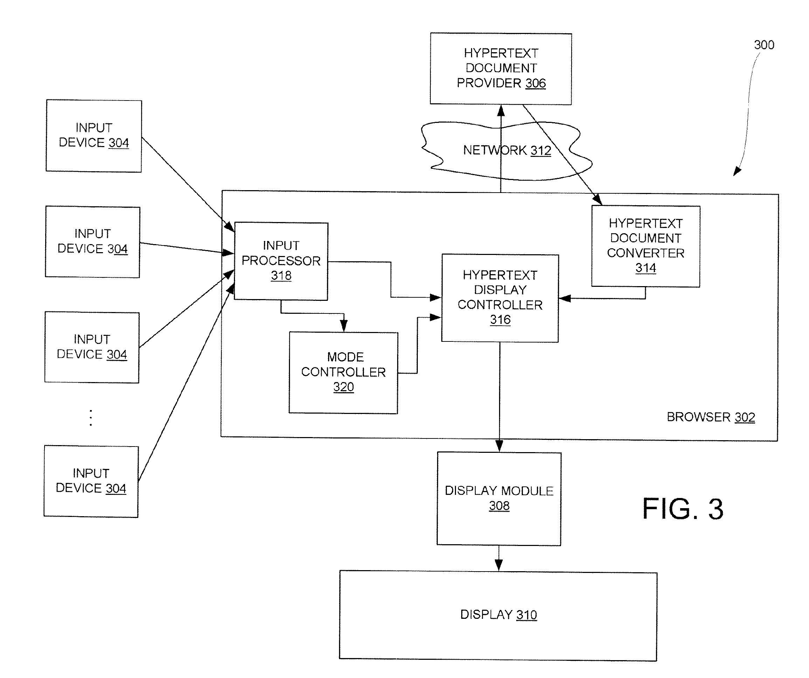

Browsing system 200 is unable to navigate and browse hypertext documents in a shared display environment where many users control a display using a variety of different input devices. Therefore, FIG. 3 illustrates a simplified block diagram of a browsing system 300 in accordance with an embodiment of the present invention.

In a shared display environment, browsing system 300 includes a plurality of input devices 304 controlled by a plurality of users in order to navigate through hypertext documents on display 310. Input devices 304 include any type of device, which can be carried on the body of a user. Examples of input devices 304 include cell phones, personal data assistants (PDAs) and other similar devices. Generally, input devices 304 should include some sort of ability to input symbols, such as alphanumerical symbols.

It should be noted that although FIG. 3 illustrates devices 304 as input devices, it is also within the scope of the present invention that devices 304 can operate as output devices. The main function of input devices 304 is to input data to browser 302. However, devices 304 can also operate to receive data from browser 302. If devices 304 are equipped with their own displays, devices 304 can display output data.

In addition, browsing system 300 includes a display module 308 and a display 310. Browser 302 instructs display module 308 to display text and images on display 310. In a shared display environment, display 310 is a shared display viewable by multiple users. Although FIG. 3 illustrates display 310 as a single display, it is within the scope of the present invention that display 310 can be multiple displays or screens that can display different text and images. It is also within the scope of the present invention that the multiple displays can be secondary displays to a main display, tertiary displays to the secondary displays and so forth. For example a secondary screen can show previews of hypertext documents already viewed by a user. These previews can appear as thumbnail images.

As was the case in system 200 shown in FIG. 2, browser 302 can be embodied in a computer readable medium containing computer readable instructions to implement the various illustrated modules/functions. The computer executable instructions can be executed on a computer such as the one illustrated in FIG. 1. As such, browser 302 can be considered a browsing system including suitably programmed computers and the like.

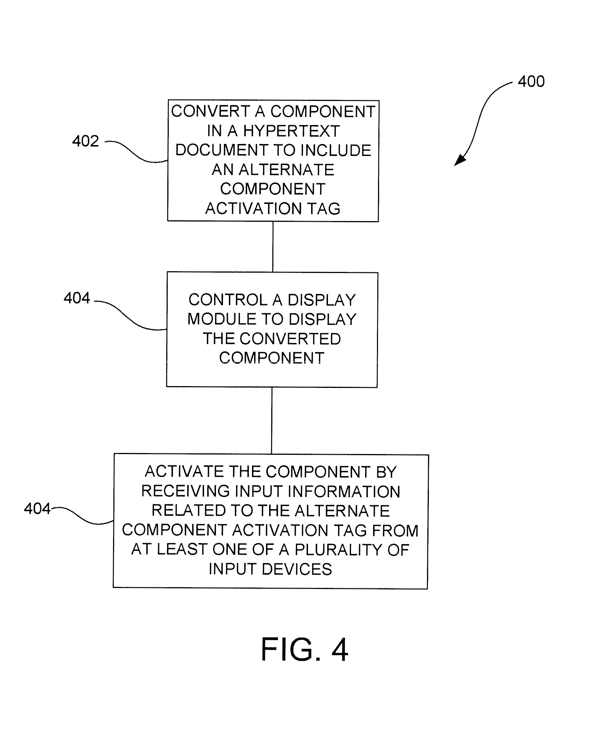

With reference to FIGS. 3 and 4, FIG. 3 illustrates browser 302 having a hypertext document converter 314 and FIG. 4 shows a flowchart 400 illustrating a method of using browsing system 300 to browse a hypertext document.

In one embodiment of the present invention, browser 302 receives a hypertext document from hypertext document provider 306. Hypertext document converter 314 converts a component in the hypertext document to include an alternate component activation tag as illustrated in block 402 of FIG. 4. To convert a component in a hypertext document, hypertext document converter 314 parses the hypertext document to find and identify all components. Components in a hypertext document include hyperlinks or "outlinks" that refer to other viewable hypertext documents or refer to other parts of the same hypertext document. Components can also include open fields that allow a user to input textual or numerical information, such as a search field. Hypertext document converter 314 also modifies each of the identified components to include alternate component activation tags. Each alternate component activation tag is associated with a symbol. In particular the symbol can be an alphanumerical symbol or other symbol that input devices 304 could easily communicate to browser 302, by one or two keys for example.

Hypertext document converter 314 passes the converted hypertext document to hypertext display controller 316. As illustrated in block 404 of FIG. 4, hypertext display controller 316 controls display module 308 to display the converted component in the hypertext document on display 310 by transmitting a set of instructions. In addition, hypertext display controller 316 instructs display module 308 to display a symbol that is associated with the alternate component activation tag next to each component. For example, hypertext display controller 316 instructs display module 308 to display a number symbol in bold-faced type next to each component.

With a symbol displayed next to each component, browser 302 activates, as shown in block 406 of FIG. 4, a component of the hypertext document by receiving an input signal from input devices 304 that relates to the alternate component activation tag. Input processor 318 processes the input signals from the plurality of input devices 304 into input information that browser 302 can recognize. Input processor 318 transmits the input information to hypertext document controller 316. Hypertext document controller 316 instructs display module 308 to display the activated component on display 310.

Input processor 318 is capable of receiving and processing different input signals (i.e. infrared signals, radio frequency signals, signals over a cell phone network, etc) from different types of input devices. In addition, input processor 318 can convert input signals into a format that hypertext display controller 316 can recognize. For example, a hyperlink can be displayed with a corresponding number symbol adjacent to the link. The number symbol is added as the alternate component activation tag. In this example, a user enters the particular number symbol associated with the alternate component activation tag into input device 304 and transmits the number as an input signal to input processor 316 of browser 302. Input processor 318 can process the input signal into input information in the form of a transmittable symbol recognizable by hypertext display controller 316. Input processor 318 can also process the input signal by converting the input signal into input information traditionally recognized by hypertext display controller 316 and transmitting the converted input information to the hypertext display controller. Hypertext display controller 316 activates and instructs display 308 to display the hypertext document of the hyperlink associated with the activated tag. In another example, an open field, such as a search field, is displayed with a corresponding alphabetical symbol "s" adjacent to the search field input box. In this example, a user enters that particular letter into input device 304 and transmits the letter as an input signal to browser 302. Input processor 318 can process the input signal into a transmittable symbol recognizable by hypertext display controller 316. Input processor 318 can also process the input signal by converting the input signal into input information that is traditionally recognized by hypertext display controller 316 and transmitting the converted input information to the hypertext display controller. The converted input information recognized by hypertext display controller can be "clicking" information usually supplied by a mouse. In addition, after activation of the search field, the user can also enter query text to perform a hypertext document search.

It should be noted that it is within the scope of the present invention that input processor 318 can receive input signals from a variety of types of input devices and can process the signals into input information in a form that browser 302 can recognize. For example, input processor 318 can include the capability of converting depressions of single buttons into text, such as the T9 protocol provided by American Online Incorporated of Dulles, Virginia, by identifying and suggesting the most commonly used word for a specific key sequence.

In a shared display environment, it is possible that input processor 318 could receive multiple input signals or commands from multiple input devices 304 at similar times. Input processor 318, therefore, is also configured to sort commands received from input devices 304 such that each command is processed in some type of order or queue. For example, input processor 318 can date/time stamp each command received such that input processor 318 processes each command according to a "first come, first serve" basis. It should be noted that the present invention is not limited to processing commands according to the order in which they were received. Input processor 318 can process commands in a variety of different ways.

For example, various scheduling algorithms can be applied to the queue of incoming commands and implemented by input processor 318. A scheduling algorithm can be, but is not limited to, a simple linear queue with timeouts for each hypertext document, a voting-based queue in which the most requested document is browsed, a moderator-based queue where a set of users have special privileges in determining what document is displayed next. With respect to a simple linear queue, a single page or user cannot be in the queue more than once at any given time.

Also, in a shared display environment, it is possible that input processor 318 can receive a command from a first input device that corresponds to an alternate component activation tag on a first hypertext document and can also receive a command from a second input device that is similar to the command received by the first input device, but corresponds to a different alternate component tag on a different hypertext document. Therefore, in another embodiment of the present invention, each hypertext document is annotated with a unique code such that a command can be associated with the correct document for which the command was intended.

For example, the first hypertext document can be prefixed, such as with a letter, and the second hypertext document can be prefixed with a different letter. Thus, input processor 318 receives a command from an input device and knows the hypertext document in which that command is associated with. This functionality allows multiple users to interact with a single browser in a meaningful way in spite of unpredictable lag times between input devices 304 and shared display 310.

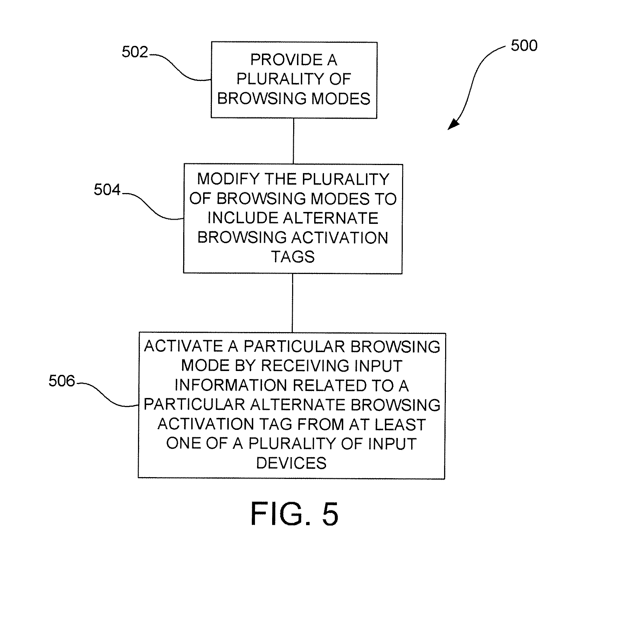

With reference to FIGS. 3 and 5, FIG. 3 illustrates browser 302 having a mode controller 320 and FIG. 5 showing a flow chart 500 illustrating a method of using browsing system 300 to browse a hypertext document.

In another embodiment of the present invention, browser 302 includes a plurality of browsing modes as illustrated in block 502 of FIG. 5. Browsing modes are navigational controls or navigational mechanisms embedded in browser 302, such as user activated buttons, for navigating hypertext documents. For example, browser 302 includes navigational controls such as navigating backwards through hypertext documents using a back button, navigating forwards through hypertext documents using a forward button and scrolling through a hypertext document using a scroll slide button. These examples of browsing modes are not an exhaustive list of browsing modes. Other browsing modes can be provided.

After browser 302 receives a hypertext document from hypertext document provider 306, mode controller 320 is configured to modify the plurality of browsing modes to include alternate browsing activation tags as illustrated in block 504 of FIG. 5. Each alternate browsing activation tag is associated with a symbol. In particular, the symbol can be an alphanumerical symbol or other symbol that input device 304 could easily communicate to browser 302 by a key sequence. Mode controller 320 passes the modified browsing modes to hypertext display controller 316 such that the hypertext display controller can instruct display module 308 to visually display an alphanumerical symbol adjacent each browsing mode button. For example, hypertext display controller 316 instructs display module 308 to display an alphanumeric symbol in bold-faced font next to each browsing mode.

After display module 308 displays a symbol next to each browsing mode, browser 302, as shown in block 506 of FIG. 5, activates a particular browsing mode by receiving input signals (i.e. infrared signals, radio frequency signals, signals over a cell phone network, etc.) from input devices 304 that relate to alternate browsing activation tags. In addition, input processor 318 can convert input signals into a format that hypertext display controller 316 can recognize. For example, a browsing mode can be displayed with a corresponding number symbol adjacent the browsing mode button. The number symbol is added as the alternate browsing activation tag. In this example, the user enters a particular number symbol associated with the alternate browsing activation tag into input device 304 and transmits the number as an input signal to input processor 318. Input processor 318 can process the input signal into input information that is in the form of a transmittable symbol recognizable by hypertext display controller 316. Input processor 318 can also process the input signal by converting the input signal into input information traditionally recognized by hypertext display controller 316, such as "clicking" information usually supplied by a mouse.

Hypertext display controller 318 instructs display module 308 to navigate through the hypertext documents on display 310 in accordance with the particular browsing mode activated by the user. In one example, if the user enters "*," browser 302 activates the hypertext document to scroll down. In another example, if the user enter "#," browser 302 activates the hypertext document to scroll up. In yet other examples, if the user enters "**" or "###," the browser activates the hypertext document to scroll down twice or scroll up three times, respectively.

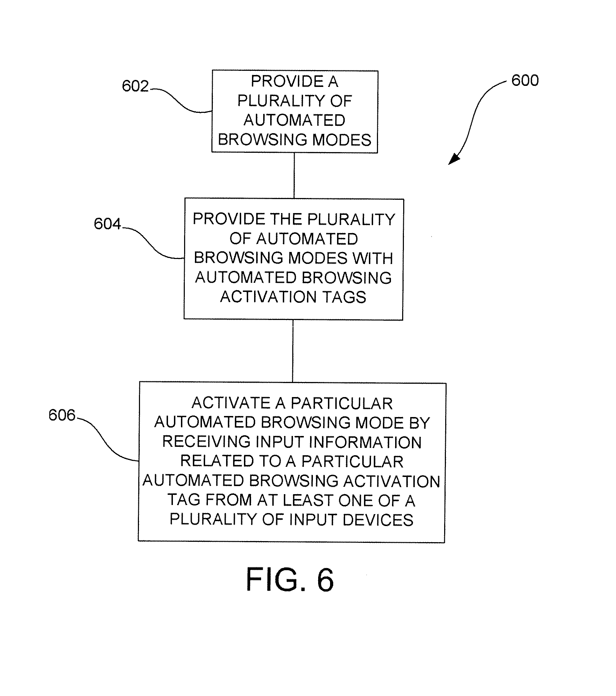

With reference to FIGS. 3 and 6, FIG. 3 illustrates a browsing system 300 and FIG. 6 shows a flowchart 600 illustrating a method of using browsing system 300 to browse a hypertext document.

In yet another embodiment, mode controller 320 of browser 302 provides a plurality of automated browsing modes as illustrated in block 602 of FIG. 6. Automated browsing modes are navigational controls or navigational mechanisms in browser 302 that allow automatic navigation of hypertext documents. Examples of automated browsing modes include: continuous scrolling of a hypertext document at a specified speed, continuous rotation or cycling among a set of hypertext documents, a continuous random walk or following through of hyperlinks, automatic previewing of hyperlinks before user selection and a sequential following of links as specified by the user. After browser 302 receives a hypertext document from hypertext document provider 306, mode controller 320 is configured to provide the plurality of automated browsing modes with automated browsing activation tags as illustrated in block 604 of FIG. 6.

Each automated browsing activation tag is associated with a symbol. In particular, the symbol can be an alphanumerical symbol or other symbol that input device 304 could easily communicate to browser 302 by a key sequence. Mode controller 320 passes the the automated browsing modes to hypertext display controller 316. Hypertext display controller 316 is configured to instruct display module 308 to display a list of symbols associated with automated browsing activation tags adjacent a list of types of automated browsing modes available. For example, if display 310 includes multiple screens, automated browsing modes and symbols associated with automated browsing activation tags can be listed in secondary or tertiary screens. The automated browsing modes and symbols can also be listed on a main screen, such as displayed on a toolbar. For example, hypertext display controller 316 instructs display module 308 to display a letter in bold-faced font next to each automated browsing mode.

After display module 308 displays a symbol next to each automated browsing mode, browser 302, as shown in block 606 of FIG. 6, activates a particular automated browsing mode by receiving an input signal from the plurality of input devices 304 that relates to the automated browsing activation tag. Input processor 318 can process the input signal into input information in the form of a transmittable symbol recognizable by hypertext display controller 316. Input processor can also process the input signal by converting the input signal into input information that is traditionally recognized by hypertext display controller 316. The converted input information recognized by hypertext display controller can be "clicking" information usually supplied by a mouse. Hypertext display controller 316 instructs display module 308 to navigate through images on display 310 in accordance with the particular automated browsing mode selected by the user.

In one example, if the user enters "c," browser 302 activates a continuous scroll through a hypertext document at a specified rate. The continuous scroll command allows users to view large documents without repeatedly entering "scroll down" commands. In another example, if the user enters "r," browser 302 activates a continuous rotation of pages at a specified rate. The continuous rotation of pages command allows a user to cycle through several pages without repeatedly entering commands to page through hypertext documents. In yet another example, if the user enters "w," browser 302 activates the hypertext document to randomly "walk" through hyperlinks in the hypertext document. The random "walk" allows a user to "walk" through links without having to select particular links. Browser 302 could be configured to randomly "walk" through links based on links that have been previously viewed on other hypertext documents. In yet another example, if the user enters "p," browser 302 activates the hypertext document to show previews of hyperlinks on a hypertext document. These previews can be extracted text and/or thumbnail images of the linked document or documents. In yet another example, if the user enters "f 1 4 17 21," browser 302 sequentially follows through or browses the array of links specified by each corresponding number symbol at a specified rate. In addition, all of the examples of automated browsing modes described above need not be selected by the user and could be automatically activated by the browser. In either scenario, however, a user has the ability to stop the automated browsing mode by entering a different command.

In yet another embodiment of the present invention, browser 302 provides hypertext document abbreviation such that display space that is needed to display a hypertext document is reduced. For example, browser 302 can automatically summarize text in the hypertext document using natural language processing to extract content from the hypertext document and generate a shorter textual summary. In this example, hypertext display controller 316 instructs display module 308 to display the summary instead of the entire hypertext document. Summarization eliminates scrolling of a web page as well as display space. In another example, browser 302 can automatically reduce the image media content in a hypertext document. In this example, display space is reduced by removing pictures in their entirety, reducing the size of pictures and reducing the resolution of images in the hypertext document.

In yet another embodiment of the present invention, browser 302 includes a status display indicating status and history information pertaining to commands issued by users . For example, the status display indicates browsing requests made in the last N minutes, which hypertext documents have been requested, the time before each page will be featured in the browser, the time limit set on each browsed page and the default scrolling speed. The status display can also indicate which users have made browsing requests and which users have requested a particular page. It should be noted that this isn't an exhaustive list of features that can be shown on a status display and that other features are possible.

Although the present invention has been described with reference to particular embodiments, workers skilled in the art will recognize that changes may be made in form and detail without departing from the spirit and scope of the invention.

## Claims

1. A method of using a browsing system to browse a hypertext document, the method comprising:
converting a component in a hypertext document to include an alternate component activation tag;
controlling a display module to display the converted component in the hypertext document; and
activating the converted component of the hypertext document by receiving an input signal related to the alternate component activation tag from at least one of a plurality of input devices.

2. The method of claim 1, wherein converting a component in a hypertext document to include an alternate component activation tag further comprises parsing the hypertext document to identify hyperlinks and open fields.

3. The method of claim 1, wherein activating the converted component of the hypertext document by receiving an input signal related to the alternate component activation tag further comprises processing the input signal such that the browsing system can recognize the input signal as an activation of the converted component.

4. The method of claim 1, wherein activating the converted component of the hypertext document by receiving an input signal related to the alternate component activation tag comprises activating the converted component by receiving an alphanumeric symbol that represents the alternate component activation tag.

5. The method of claim 1 and further comprising:
providing a plurality of browsing modes to perform various navigational commands;
modifying the plurality of browsing modes to include alternate browsing activation tags; and
activating a particular browsing mode by receiving an input signal related to a particular alternate browsing activation tag from at least one of the plurality of input devices.

6. The method of claim 5, wherein activating a particular browsing mode by receiving an input signal related to a particular alternate browsing activation tag comprises activating the particular browsing mode by receiving an alphanumeric symbol that represents the particular alternate browsing activation tag.

7. The method of claim 1 and further comprising abbreviating the hypertext document such that display space needed in displaying the hypertext document is reduced.

8. The method of claim 7, wherein abbreviating the hypertext document comprises automatically summarizing text in the hypertext document.

9. The method of claim 7, wherein abbreviating the hypertext document comprises automatically reducing image media content in the hypertext document.

10. The method of claim 1 and further comprising:
providing a plurality of automated browsing modes to perform various navigational controls;
providing the plurality of automated browsing modes with automated browsing activation tags; and
activating a particular automated browsing mode.

11. The method of claim 10 and further comprising deactivating the particular automated browsing mode by receiving a command from one of the plurality of input devices.

12. The method of claim 10, wherein activating a particular automated browsing mode comprises activating the particular automated browsing mode by receiving an input signal related to a particular automated browsing activation tag from at least one of the plurality of input devices.

13. The method of claim 12, wherein activating a particular automated browsing mode by receiving an input signal related to a particular automated browsing activation tag comprises activating the particular automated browsing mode by receiving an alphanumeric symbol that represents the automated browsing activation tag.

14. The method of claim 1 and further comprising annotating the hypertext document with a unique code such that the input signal is associated with the hypertext document.

15. A method of using a browsing system to browse a hypertext document, the method comprising:
providing a plurality of browsing modes to perform various navigational commands;
modifying the plurality of browsing modes to include alternate browsing activation tags;
activating a particular browsing mode by receiving an input signal related to a particular alternate browsing activation tag from at least one of a plurality of input devices.

16. The method of claim 15, wherein activating a particular browsing mode by receiving an input signal related to a particular alternate browsing activation tag comprises activating the particular browsing mode by receiving an alphanumeric symbol that represents the alternate browsing activation tag.

17. The method of claim 15 and further comprising:
providing a plurality of automated browsing modes to perform various automated navigational functions;
providing the plurality of automated browsing modes with automated browsing activation tags; and
activating a particular automated browsing mode.

18. The method of claim 17, wherein activating a particular automated browsing mode comprises activating the particular automated browsing mode by receiving an input signal related to a particular automated browsing activation tag from at least one of the plurality of input devices.

19. The method of claim 18, wherein activating a particular automated browsing mode by receiving an input signal related to a particular automated browsing activation tag comprises activating the particular automated browsing mode by receiving an alphanumeric symbol that represents the particular automated browsing activation tag.

20. The method of claim 15 and further comprising:
converting a component in the hypertext document to include an alternate component activation tag;
controlling a display module to display the converted component in the hypertext document; and
activating the converted component of the hypertext document by receiving an input signal related to the alternate link activation tag from at least one of the plurality of input devices.

21. The method of claim 20, wherein activating the component of the hypertext document by receiving an input signal related to the alternate link activation tag comprises activating the component of the hypertext document by receiving an alphanumeric symbol that represents the alternate link activation tag.

22. A browsing system for displaying a hypertext document on a display comprising:
a hypertext document converter configured to convert a component in the hypertext document to include an alternate component activation tag;
a hypertext display controller configured to instruct a display module to display the converted component in the hypertext document; and
an input processor configured to receive and process input signals related to the alternate component activation tag from at least one of a plurality of input devices.

23. The browsing system of claim 22, wherein the input signal received by the input processor is associated with an alphanumerical symbol.

24. The browsing system of claim 22, wherein the input processor further comprises an output module configured to receive data from the hypertext display controller and output data to at least one of the plurality of input devices.

25. The browsing system of claim 22, wherein the input processor is further configured to process the input signals in an order.

26. The browsing system of claim 25, wherein the input processor is further configured to implement a scheduling algorithm to process the input signals in the order.

27. The browsing system of claim 22 wherein the plurality of input devices comprises cell phones or personal data assistants (PDAs).

28. The browsing system of claim 22 and further comprising a mode controller configured to modify a plurality of browsing modes to include alternate browsing activation tags.

29. The browsing system of claim 22 and further comprising a mode controller configured to provide a plurality of automated browsing modes with automated browsing activation tags.

30. The browsing system of claim 22, wherein the display comprises a shared display.

31. The browsing system of claim 30, wherein the shared display comprises multiple screens.

32. The browsing system of claim 30, wherein the shared display includes a status display indicating status and historical information related to the input signals from the plurality of input devices.

33. A browsing system for displaying a hypertext document on a display comprising:
a mode controller configured to modify a plurality of browsing modes to include alternate browsing activation tags;
an input processor configured to receive and process an input signal related to a particular alternate browsing activation tag from at least one of a plurality of input devices.

34. The browsing system of claim 33, wherein the plurality of browsing modes comprises a variety of navigational controls for browsing through hypertext documents.

35. The browsing system of claim 33, wherein the mode controller is further configured to provide a plurality of automated browsing modes with automated browsing activation tags.

36. The browsing system of claim 35, wherein the automated browsing modes comprise continuous scrolling of the hypertext document, continuous cycling through a plurality of hypertext documents, continuous random following of hyperlinks, automatic previewing of hypertext documents and continuous browsing of hyperlinks as specified by a user.

37. The browsing system of claim 33 and further comprising:
a hypertext document converter configured to convert a component in the hypertext document to include an alternate component activation tag; and
a hypertext display controller configured to instruct a display module to display the component in the hypertext document.

38. A computer-readable medium containing computer executable instructions for implementing the steps of:
converting a component in a hypertext document to include an alternate component activation tag represented by a symbol;
controlling a display to display the symbol representing the converted component; and
activating the converted component by receiving and processing the symbol.

39. The computer-readable medium of claim 38 and further comprising the steps of:
providing a plurality of browsing modes;
modifying the plurality of browsing modes to include alternate browsing activation tags, each alternate browsing activation tag represented by a symbol; and
activating a particular browsing mode by receiving and processing a particular symbol.

40. The computer-readable medium of claim 38 and further comprising the steps of:
providing a plurality of automated browsing modes;
providing the plurality of automated browsing modes with automated browsing activation tags, each automated browsing activation tag represented by a symbol; and
activating a particular browsing mode by receiving and processing a particular symbol.
